# EUROPÄISCHE PATENTSCHRIFT

(11) **EP 3 519 208 B1**
(45) Veröffentlichungstag und Bekanntmachung des Hinweises auf die Patenterteilung: **27.01.2021**
(21) Anmeldenummer: 17734725.9
(22) Anmeldetag: 03.07.2017
(51) Int. Cl.: B60C 11/13, B60C 11/03, B60C 11/01

(54) **FAHRZEUGLUFTREIFEN**
PNEUMATIC VEHICLE TYRES
PNEUMATIQUE DE VÉHICULE

(30) Priorität: 30.09.2016 DE 102016219017
(43) Veröffentlichungstag der Anmeldung: 07.08.2019
(73) Patentinhaber: Continental Reifen Deutschland GmbH, 30165 Hannover (DE)
(72) Erfinder: RITTWEGER, Stefan, 30826 Garbsen (DE); CHONG-SHI-AI, Jenny, 52100 Kuala Lumpur (MY); BAPTISTA, Diogo, 30159 Hannover (DE); BEHR, Ulrich, 30167 Hannover (DE)
(74) Vertreter: Finger, Karsten
(86) Internationale Anmeldenummer: PCT/EP2017/066418
(87) Internationale Veröffentlichungsnummer: WO 2018/059759

(56) Entgegenhaltungen:
- EP-A1- 0 687 582
- EP-A2- 2 455 235
- WO-A1-2014/056651
- WO-A1-2017/141913
- WO-A1-2017/141915
- JP-A- 2000 043 514
- JP-A- 2005 161 921

## Beschreibung

Die Erfindung betrifft einen Fahrzeugluftreifen in Radialbauart mit einem Laufstreifen mit mindestens einem seitlich von zumindest einer Umfangsrille begrenzten und in Umfangsrichtung umlaufenden Profilband, welches über seinen Umfang mit zumindest einer eine Vielzahl von parallel zueinander verlaufende Querrillen aufweisenden Querrillenreihe versehen ist, wobei die Querrillen innerhalb des Profilbandes enden oder mit ihrem einen Ende in die das Profilband seitlich begrenzende Umfangsrille einmünden und mit ihrem anderen Ende innerhalb des Profilbandes enden,
wobei jede Querrille einen Rillengrund und zwei Rillenwände und in Draufsicht zwei aneinander anschließende, erste und zweite Rillenabschnitte aufweist, welche, bezogen auf die in Rillenlaufrichtung verlaufende Mittellinie der Querrille, einen stumpfen Winkel einschließen, wobei die Rillenabschnitte an der Profilbandaußenfläche jeweils durch zwei gerade verlaufende Rillenkanten begrenzt sind, und wobei die Rillenkanten des ersten Rillenabschnittes an die Rillenkanten des zweiten Rillenabschnittes anschließen.

Ein derartiger Fahrzeugluftreifen ist beispielsweise aus der DE 10 2012 108 384 A1 bekannt. Der eine, erste Rillenabschnitte mündet in die das Profilband begrenzende Umfangsrille ein und verläuft zur axialen Richtung unter einem Winkel von bis zu 15°. Im ersten Rillenabschnitt sind entlang beider Rillenkanten Fasen ausgebildet. Der andere, zweite Rillenabschnitt erstreckt sich in Umfangsrichtung, weist eine geringere Tiefe auf als der erste Rillenabschnitt und ist durch zueinander V-förmig verlaufende Rillenwände begrenzt.

Aus der EP 2 457 745 A1 ist ein Fahrzeugluftreifen bekannt, dessen Laufstreifen ein Profilband aufweist, welches mit voneinander beabstandeten Paaren von axial nebeneinander angeordneten Rillen versehen ist. Die Rillen weisen jeweils einen in Umfangsrichtung verlaufenden Rillenabschnitt auf, in welchem die Tiefe der Rille ausgehend vom Rillenende zunimmt, sowie einen an diesen unmittelbar anschließenden und schräg zur Umfangsrichtung verlaufenden Rillenabschnitt auf.

Aus der JP 2000 043 514 A ist ferner ein Fahrzeugluftreifen bekannt, welcher einen Laufstreifen mit einer mittleren Profilblockreihe mit durch Querrillen voneinander getrennten Profilblöcken aufweist. Die Querrillen setzen sich jeweils aus Rillenabschnitten zusammen, welche in Draufsicht einen stumpfen Winkel einschließen. Im Bereich jeder Querrille sind die Profilblöcke an jeweils einer Blockecke angefast, wobei die angefasten Blockecken an unterschiedlichen Querrillenenden liegen. Durch diese Maßnahmen sollen die Profilblöcke gleichmäßig abreiben und die Handlingeigenschaften des Fahrzeugluftreifens günstig beeinflusst werden.

Andere Fahrzeugluftreifen sind aus EP 0687582 A, WO 2014056651 A und EP 2455235 A bekannt.

Es ist ferner üblich, Laufstreifen von Fahrzeugluftreifen mit Profilblockreihen zu versehen, deren Profilblöcke durch Querrillen voneinander getrennt sind. Solche "durchgehenden" Querrillen sind meist günstig für das Wasserdrainagevermögen des Laufstreifens, ihre ausgeprägte Rillenkanten können jedoch unerwünschter Weise das Abrollgeräusch des Reifens verstärken. Durch die abwechselnde Anordnung von durchgehenden Querrillen und Profilblöcken weisen Profilblockreihen über ihren Umfangs Steifigkeitsunterschiede auf. Die damit beim Abrollen des Reifens einhergehende "Gelenkwirkung" kann einen ungleichmäßigen Abrieb des Laufstreifens zur Folge haben.

Profilbänder zeichnen sich durch eine "geschlossenere" Struktur aus als Profilblockreihen und sind beispielsweise mit einer Vielzahl von sacknutartig endenden oder innerhalb des Profilbandes verlaufenden Rillen oder Einschnitten versehen, welche bei den bekannten Ausgestaltungen ebenfalls lokale und nachteilige Steifigkeitssprünge im Profilband bewirken. Eine Erhöhung der Einschnitt- und/oder Rillenanzahl würde die Steifigkeitssprünge zwar vermindern, hätte aber nachteilige Wirkung auf die Brems- und Handlingeigenschaften auf trockener Fahrbahn.

Der Erfindung liegt daher die Aufgabe zugrunde, bei einem Reifen der eingangs genannten im Laufstreifen Profilbänder derart zu gestalten, dass ein gleichmäßiger Abrieb sowie gute Brems- und Handlingeigenschaften auf trockner Fahrbahn und gute Nassgriffeigenschaften sichergestellt sind.

Die gestellte Aufgabe wird erfindungsgemäß dadurch gelöst, dass der erste Rillenabschnitt zur axialen Richtung unter einem Winkel von bis zu 20° und der zweite Rillenabschnitt zur axialen Richtung unter einem Winkel von 30° bis 50° verläuft, wobei in jedem Rillenabschnitt an jeweils einer Rillenwand eine eine Schrägfläche bildende, zur und entlang der diese Rillenwand begrenzenden Rillenkante verlaufende Fase ausgebildet ist, wobei die Fasen entlang von Rillenkanten verlaufen, die nicht aneinander anschließen.

Gemäß der Erfindung weisen die im Profilband ausgebildeten Querrillen in Draufsicht einen "geknickten" Verlauf auf. Dieser spezielle Verlauf verleiht dem Profilband eine besonders ausgewogene Gesamtsteifigkeit, d.h. eine besonders gleichmäßige, für einen gleichmässigen Abrieb und gute Brems- und Handlingeigenschaften auf trockener Fahrbahn vorteilhafte Steifigkeit über seine gesamte Umfangserstreckung. Durch die in den beiden Rillenabschnitten entlang der nicht aneinander anschließenden Rillenkanten ausgebildeten Fasen werden ebenfalls die Brems- und Handlingeigenschaften auf trockener Fahrbahn günstig beeinflusst. Die zur axialen Richtung unterschiedlich geneigt verlaufenden Rillenabschnitte sind besonders vorteilhaft für ein geringes Abrollgeräusch.

Für die Nassgriffeigenschaften und eine gute Wasserableitung des Laufstreifens ist es günstig, wenn der erste Rillenabschnitt zur axialen Richtung unter einem Winkel von bis zu 15° und der zweite Rillenabschnitt zur axialen Richtung unter einem Winkel von bis zu 40° verlaufen.

Eine in Umfangsrichtung besonders ausgewogene Steifigkeit weisen Profilbänder auf, die zwei oder mehr, insbesondere bis zu vier Querrillenreihen besitzen. Bei einer bevorzugten Ausführungsform der Erfindung weist daher das Profilband eine erste und eine zweite, zueinander in Umfangsrichtung versetzte Querrillenreihe auf, wobei die Querrillen der ersten Querrillenreihe in die eine Umfangsrichtung und die Querrillen der zweiten Querrillenreihe in die andere Umfangsrichtung geneigt sind und wobei die Querrillen der ersten Querrillenreihe in axialer Richtung mit den Querrillen der zweiten Querrillenreihe abschnittsweise überlappen.

Das Profilband im Laufstreifen kann auch eine dritte Querrillenreihe und optional auch eine vierte Querrillenreihe aufweisen, deren Anordnung im Profilband in einer für die Steifigkeit des Profilbandes und einen gleichmäßigen Abrieb besonders günstigen Weise erfolgt. Weist das Profilband eine dritte Querrillenreihe auf, so ist es daher von Vorteil, wenn deren Querrillen in axialer Richtung neben den Querrillen der ersten Querrillenreihe verlaufen und in axialer Richtung mit den Querrillen der zweiten Querrillenreihe abschnittsweise überlappen. Bei einer Ausführung des Profilbandes mit einer vierten Querrillenreihe ist es von Vorteil, wenn deren Querrillen in axialer Richtung neben den Querrillen der zweiten Querrillenreihe verlaufen und in axialer Richtung mit den Querrillen der dritten Querrillenreihe abschnittsweise überlappen.

Ein erfindungsgemäß ausgeführtes Profilband im Laufstreifen des Fahrzeugluftreifens kann vorzugsweise zumindest eine Querrillenreihe aufweisen, deren Querrillen innerhalb des Profilbandes enden. Für ein gutes Wasserableitvermögen des Profilbandes ist es jedoch günstig, wenn die Querrillen einer Querrillenreihe mit ihrem einen Ende in die das Profilband seitlich begrenzende Umfangsrille einmünden.

Bei dieser Ausführung der Erfindung ist es für eine gleichmäßige Stabilität des Profilbandes günstig, wenn die Querrillen bei der Umfangsrille einen Einmündungsabschnitt aufweisen, in welchem jeweils eine Grundanhebung ausgebildet ist, die in Umfangsrichtung benachbarte Profilbandbereiche aneinander anbindet.

Ist der Laufstreifen des Fahrzeugluftreifens derart ausgeführt, dass er als schulterseitiges Profilband ein erfindungsgemäß gestaltetes Profilband aufweist, so ist es günstig, wenn dieses im montierten Zustand des Fahrzeugluftreifens entlang der der Fahrzeuginnenseite zugeordneten Laufstreifenschulter verläuft.

Bei der Ausführung von Laufstreifen mit zumindest einem erfindungsgemäß gestalteten schulterseitigen Profilband ist es für dessen Stabilität und einen gleichmäßigen Abrieb von Vorteil, wenn das Profilband vier Querrillenreihen aufweist, von welchen die beiden mittleren teilweise innerhalb und teilweise außerhalb der Bodenaufstandsfläche des Laufstreifens verlaufen. Ein derart ausgestaltetes schulterseitige Profilband weist daher vorteilhafterweise eine Querrillenreihe auf, deren Querrillen komplett außerhalb der Bodenaufstandsfläche verlaufen.

Die Stabilität und der Abrieb werden ferner auch dadurch günstig beeinflusst, dass, im Längsschnitt der Querrillen betrachtet, ihr Rillengrund zumindest einen Endabschnitt, insbesondere zwei Endabschnitte, aufweist, welcher bzw. welche unter einem Winkel von 30° bis 50°, insbesondere von 35° bis 45°, zur radialen Richtung in Richtung Profilbandaußenfläche verläuft bzw. verlaufen.

Weitere Merkmale, Vorteile und Einzelheiten der Erfindung werden nun anhand der Zeichnung, die ein Ausführungsbeispiel der Erfindung zeigt, näher beschrieben. Dabei zeigen
Fig. 1 eine Draufsicht auf einen Umfangsabschnitt eines Profilbandes eines Laufstreifens eines Fahrzeugluftreifens mit einer Ausführungsvariante der Erfindung,
Fig. 2 Querschnitte durch eine Querrille entlang der Linien II-II der Fig. 1,
Fig. 3 einen Längsschnitt durch eine Querrille einer ersten Querrillenreihe entlang der Linie III-III der Fig. 1,
Fig. 4 einen Längsschnitt durch eine Querrille einer zweiten Querrillenreihe entlang der Linie IV-IV der Fig. 1,
Fig. 5 einen Längsschnitt durch eine Querrille einer dritten Querrillenreihe entlang der Linie V-V der Fig. 1 und
Fig. 6 einen Längsschnitt durch eine Querrille einer vierten Querrillenreihe entlang der Linie VI-VI der Fig. 1.

Erfindungsgemäß ausgeführte Fahrzeugluftreifen sind insbesondere Reifen in Radialbauart für Personenkraftwagen, Vans oder Light-Trucks. Ein "Profilband" im Sinne der gegenständlichen Erfindung umläuft den Laufstreifen in Umfangsrichtung und ist mit Rillen versehen, die entweder komplett innerhalb des Profilbandes verlaufen oder zumindest mit ihrem einen Ende innerhalb des Profilbandes auslaufen.

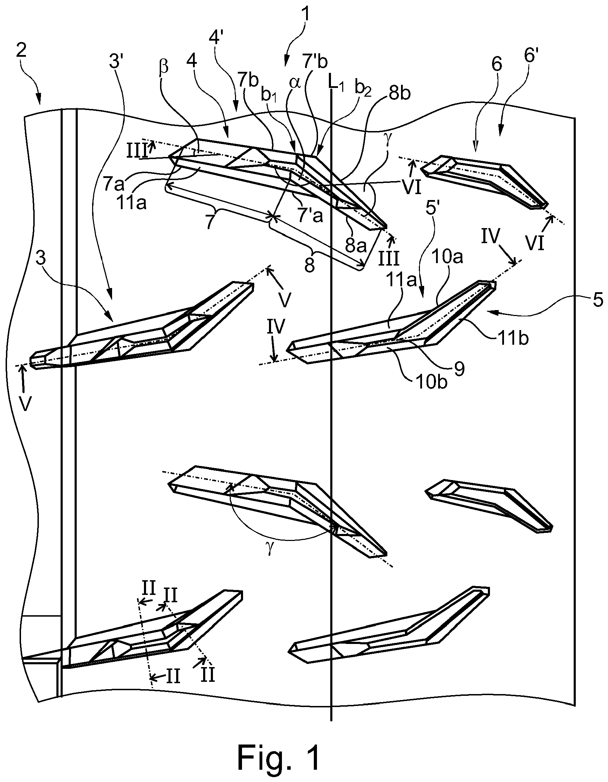

In Fig. 1 ist von einem Laufstreifen eines Fahrzeugluftreifens ein Umfangsabschnitt eines schulterseitigen Profilbandes 1, welches laufstreifeninnseitig von einer Umfangsrille 2 begrenzt ist, dargestellt. Ein Fahrzeugluftreifen, dessen Laufstreifen nur in einer seiner Schultern ein Profilband 1 aufweist, wird vorzugsweise derart am Fahrzeug montiert, dass das Profilband 1 im montierten Zustand des Fahrzeugluftreifens entlang der der Fahrzeuginnenseite zugeordneten Laufstreifenschulter positioniert ist. Alternativ kann der Laufstreifen des Fahrzeugluftreifens in jeder Schulter ein derartiges Profilband 1 aufweisen. Der seitliche Rand der Bodenaufstandsfläche ist in Fig. 1 durch die Linie L₁ gekennzeichnet.

Das Profilband 1 ist mit vier auf besondere Weise zueinander angeordneten Querrillenreihen 3', 4', 5', 6' versehen - eine erste Querrillenreihe 3', eine zweite Querrillenreihe 4', eine dritte Querrillenreihe 5' und eine vierte Querrillenreihe 6'- welche jeweils aus einer Vielzahl von über den Umfang des Profilbandes 1 verteilten, sich jeweils parallel zueinander erstreckenden, schmalen und kurzen Querrillen 3, 4, 5 bzw. 6 bestehen, wobei die Querrillen 3, 4, 5, 6 in Umfangsrichtung im Wesentlichen übereinstimmende gegenseitigen Abstände aufweisen. Die zur ersten und zur dritten Querrillenreihe 3', 5' gehörenden Querrillen 3, 5 sowie die zur zweiten und zur vierten Querrillenreihe 4', 6' gehörenden Querrillen 4, 6 liegen in axialer Richtung paarweise nebeneinander. Die Paare von Querrillen 3, 5 und die Paare von Querrillen 4, 6 wechseln in Umfangsrichtung ab und sind in axialer Richtung gegeneinander versetzt, sodass, in Umfangsrichtung betrachtet, die Querrillen 3 mit den Querrillen 4, die Querrillen 4 mit den Querrillen 5 und diese mit den Querrillen 6 abschnittsweise "überlappen".

Die Querrillen 4 und 5 verlaufen jeweils zum Teil innerhalb und zum Teil außerhalb der Bodenaufstandsfläche im Profilband 1, ihre beiden Enden befinden sich innerhalb des Profilbandes 1. Die Querrillen 4 verlaufen jeweils über etwa 75% ihrer Erstreckungslänge l₁, welche entlang der in Rillenlaufrichtung ausgerichteten Mittellinie der Querrillen 3, 4, 5 ermittelt wird und 15,0 mm bis 20,0 mm beträgt, innerhalb der Bodenaufstandsfläche, die Querrillen 5 jeweils über etwa 25% ihrer Erstreckungslänge l₁. Die Querrillen 3 verlaufen laufstreifeninnseitig der Querrillen 5, münden in die Umfangsrille 2 ein und enden sacknutartig innerhalb des Profilbandes 1. Die Querrillen 6 verlaufen bereits außerhalb der Bodenaufstandsfläche, ihre beiden Enden befinden sich innerhalb des Profilbandes 1. Die Querrillen 6 weisen entlang ihrer in Rillenlaufrichtung ausgerichteten Mittellinie eine geringere Erstreckungslänge auf als die Querrillen 3, 4, 5.

Jede Querrille 3, 4, 5, 6 weist zwei Rillenabschnitte 7, 8 auf, welche, bezogen auf die Mittellinien der Querrillen 3, 4, 5, 6, miteinander einen stumpfen Winkel α einschließen. Der Rillenabschnitt 7 verläuft, bezogen auf die Mittellinie, zur axialen Richtung unter einem Winkel β von bis 20°, insbesondere von bis zu 15°, kann jedoch auch in axialer Richtung verlaufen. Der Rillenabschnitt 8 verläuft, bezogen auf die Mittellinie, unter einem Winkel γ von 30° bis 50°, insbesondere von bis zu 40°. Beim gezeigten Ausführungsbeispiel schließt der Rillenabschnitt 8 jeweils an das laufstreifenaußenseitige Ende des Rillenabschnittes 7 an. Die Rillenabschnitte 7 sind im Wesentlichen gleich lang wie die Rillenabschnitte 8 bzw. um bis zu 30% länger als die Rillenabschnitte 8

An der Profilbandaußenfläche ist jede Querrille 3, 4, 5, 6 durch gerade verlaufende Rillenkanten 7a, 7b, 8a, 8b begrenzt. Die Rillenkanten 7a, 7b begrenzen den Rillenabschnitt 7, verlaufen im Wesentlichen parallel zueinander sowie zur axialen Richtung unter dem bereits erwähnten Winkel β, wobei sich der gegenseitige Abstand der Rillenkanten 7a, 7b zum freien Querrillenende geringfügig und kontinuierlich verringert. An der Profilbandaußenfläche weist der Rillenabschnitt 7 an seiner breitesten Stelle eine Breite b₁ auf, welche senkrecht zur Mittellinie ermittelt wird und 2,5 mm bis 3,5 mm beträgt. Die Rillenkanten 7a, 7b setzen sich mit einem Kantenabschnitt 7'a, 7'b in den Rillenabschnitt 8 hinein verlaufend fort, wobei diese Kantenabschnitte 7'a, 7'b gemeinsam mit den Rillenkanten 8a, 8b den Rillenabschnitt 8 begrenzen. Die Rillenkante 8a verläuft zur axialen Richtung im Wesentlichen unter dem Winkel γ. Die Rillenkante 8b ist um 5° bis 15° stärker zur axialen Richtung geneigt als die Rillenkante 8a, sodass der gegenseitige Abstand der Rillenkanten 8a, 8b zum freien Querrillenende abnimmt. An seiner breitesten Stelle weist der Rillenabschnitt 8 eine senkrecht zur Mittellinie ermittelte Breite b₂ vom 2,5 mm bis 3,5 mm auf.

Die Querrillen 3, 4, 5, 6 sind derart im Profilband 1 angeordnet, dass die Rillenabschnitte 7, 8 der Querrillen 3, 5 in die eine Umfangsrichtung geneigt sind und die Rillenabschnitte 7, 8 der Querrillen 4, 6 in die entgegengesetzte, andere Umfangsrichtung geneigt sind.

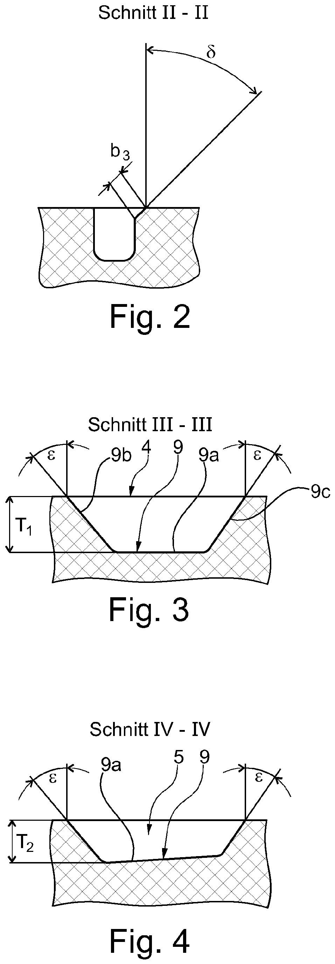

Jede Querrille 3, 4, 5, 6 ist ferner durch einen Rillengrund 9 und zwei Rillenwände 10a, 10b begrenzt, wobei die Rillenwand 10a zwischen dem Rillengrund 9 und den aneinander anschließenden Rillenkanten 7a und 8a und die Rillenwand 10b zwischen dem Rillengrund 9 und den aneinander anschließenden Rillenkanten 7b und 8b verläuft. Gemäß Fig. 2, welche einen Querschnitt sowohl durch den Rillenabschnitt 7 als auch durch den Rillenabschnitt 8 zeigt, verlaufen die Rillenwände 10a, 10b zur radialen Richtung unter einem Winkel von 1° bis 7°.

Wie insbesondere Fig. 1 in Kombination mit Fig. 2 zeigt, ist in jedem Rillenabschnitt 7, 8 eine der beiden Rillenwände 10a, 10b zur Außenfläche des Profilbandes 1 angefast, sodass die Rillenwand 10a eine als ebene Schrägfläche ausgebildete Fase 11a und die Rillenwand 10b eine als ebene Schrägfläche ausgebildete Fase 11b aufweist. Die Fasen 11a, 11b laufen an den Querrillenenden aus. Die an der Rillenwand 10a ausgebildete Fase 11a erstreckt sich über die Länge des Rillenabschnittes 7 und läuft im Rillenabschnitt 8 entlang der Rillenwand 10a aus. An der Profilbandoberfläche verläuft die Fase 11a daher entlang des Rillenkante 7a, welche, bedingt durch den "abgeknickten" Querrillenverlauf (Winkel α), den bereits erwähnten Kantenabschnitt 7'a aufweist. Die an der Rillenwand 10b ausgebildete Fase 11b erstreckt sich über die Länge des Rillenabschnittes 8 entlang der Rillenkante 8b und läuft entlang des Kantenabschnittes 7'b im Rillenabschnitt 8 aus. Die beiden Fasen 11a, 11b verlaufen daher entlang jener Rillenkanten 7a, 8b, die nicht aneinander anschließen. Wie der Querschnitt in Fig. 2 zeigt, verlaufen die Fasen 11a, 11b zur radialen Richtung jeweils unter einem konstanten Winkel δ von 40° bis 50°, insbesondere von etwa 45°, und weisen eine in der jeweilige Fasenebene ermittelte Breite b₃ auf, welche an der breitesten Stelle der Fase 11a, 11b 3,0 mm bis 5,0 mm beträgt.

Fig. 3 zeigt einen Längsschnitt durch eine Querrille 4 entlang der in Rillenlaufrichtung verlaufenden Mittellinie. Die Querrille 4 weist in radialer Richtung an ihrer tiefsten Stelle eine Tiefe T₁ auf, welche vorzugsweise der für den betreffenden Fahrzeugluftreifen vorgesehenen maximalen Profiltiefe entspricht, die für PKW-Reifen 6,5 mm bis 8,5 mm beträgt. Der Rillengrund 9 jeder Querrille 4 setzt sich aus einem in der Tiefe T₁ verlaufenden Basisabschnitt 9a, einem an das laufstreifeninnenseitige Ende des Basisabschnittes 9a anschließenden Endabschnitt 9b und einem an das laufstreifenaußenseitige Ende des Basisabschnittes 9a anschließenden Endabschnitt 9c zusammen. Der Basisabschnitt 9a erstreckt sich über 60% bis 80% der Erstreckungslänge l₁ der Querrille 4. Die Endabschnitte 9b, 9c verlaufen zur radialen Richtung unter einem Winkel ε von 30° bis 50°, insbesondere von 35° bis 45°, wobei der Endabschnitt 9b beim gezeigten Ausführungsbeispiel stärker zur radialen Richtung geneigt ist als der Endabschnitt 9c.

Fig. 4 zeigt einen Längsschnitt durch eine Querrille 5 entlang der in Rillenlaufrichtung verlaufenden Mittellinie. Der Rillengrund 9 der Querrille 5 ist im Wesentlichen übereinstimmend zum Rillengrund 9 der Querrille 4 ausgeführt und weist daher ebenfalls einen Basisabschnitt 9a auf, welcher jedoch geringfügig zur Laufstreifenoberfläche in Richtung Laufstreifenaußenseite ansteigt. Jede Querrille 5 weist daher am laufstreifeninnenseitigen Ende ihres Basisabschnittes 9a in radialer Richtung ihre größte Tiefe T₂ von beispielsweise 2,0 mm bis 3,0 mm auf.

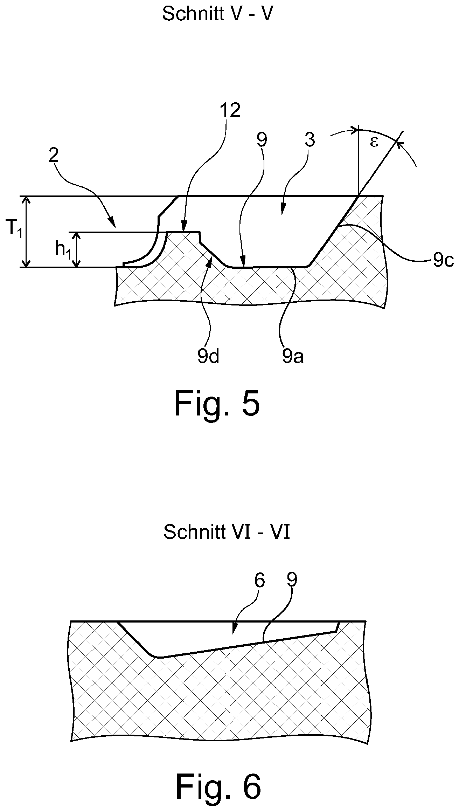

Gemäß Fig. 5, welche einen Längsschnitt durch eine in die Umfangsrille 2 mündende Querrille 3 zeigt, weist jede Querrille 3 in radialer Richtung an ihrer tiefsten Stelle die bereits erwähnte Tiefe T₁ auf. Der Rillengrund 9 jeder Querrille 3 setzt sich aus einem in der Tiefe T₁ verlaufenden Basisabschnitt 9a, einen an das eine Ende des Basisabschnittes 9a anschließenden Endabschnitt 9c, welcher übereinstimmend zum Endabschnitt 9c des Rillengrundes 9 der Querrille 4 (Fig. 3) ausgeführt ist, sowie einen an das andere Ende des Basisabschnittes 9a anschließenden und zur Umfangsrille 2 verlaufenden Einmündungsabschnitt 9d zusammen. Der Basisabschnitt 9a erstreckt sich über 40% bis 60% der Erstreckungslänge der Querrille 3. Der Einmündungsabschnitt 9d weist eine Grundanhebung 12 auf, welche in Umfangsrichtung benachbarte, an die Umfangsrille 2 angrenzende Profilbandbereiche aneinander anbindet und derart die Stabilität des Profilbandes 1 erhöht und vergleichmäßigt. Die Grundanhebung 12 weist in radialer Richtung eine Höhe h₁ auf, welche vorzugsweise zirka 50% der Tiefe T₁ entspricht.

Fig. 6 zeigt einen Längsschnitt durch eine außerhalb der Bodenaufstandsfläche verlaufende Querrille 6 entlang ihrer Mittellinie. Die Querrillen 6 sind seichter ausgeführt als die Querrillen 3, 4, 5 und laufen Richtung Laufstreifenschulter in an sich bekannter Weise aus.

Die Erfindung ist auf das dargestellte und beschriebene Ausführungsbeispiel nicht beschränkt. Die Erfindung umfasst grundsätzlich Laufstreifen, welche zumindest ein, seitlich von zumindest einer Rille begrenzten Profilband aufweisen, welches mit zumindest einer Querrillenreihe, wie beschrieben, versehen ist. Diese Querrillenreihe kann Querrillen aufweisen, die in eine Umfangsrille münden oder Querrillen, die komplett innerhalb des Profilbandes liegen. Insbesondere kann der Laufstreifen zumindest ein Profilband aufweisen, welches mit zwei bis vier Querrillenreihen versehen ist.

### Bezugsziffernliste

- 1 .................................: Profilband
- 2 .................................: Umfangsrille
- 3, 4, 5, 6......................: Querrille
- 3', 4', 5', 6' ................: Querrillenreihe
- 7, 8 .............................: Rillenabschnitt
- 7a, 7b, 8a, 8b ..............: Rillenkante
- 7'a, 7'b .......................: Kantenabschnitt
- 9 .................................: Rillengrund
- 9a ...............................: Basisabschnitt
- 9b, 9c..........................: Endabschnitt
- 9d ...............................: Einmündungsabschnitt
- 10a, 10b......................: Rillenwände
- 11a, 11b......................: Fase
- 12 ...............................: Grundanhebung
- b₁, b₂, b₃......................: Breite
- h₁ ................................: Höhe
- l₁ .................................: Erstreckungslänge
- L₁ ...............................: Linie
- T₁, T₂..........................: Tiefe
- α, β, γ, δ, ε ..................: Winkel

## Patentansprüche

1. Fahrzeugluftreifen in Radialbauart mit einem Laufstreifen mit mindestens einem seitlich von zumindest einer Umfangsrille (2) begrenzten und in Umfangsrichtung umlaufenden Profilband (1), welches über seinen Umfang mit zumindest einer eine Vielzahl von parallel zueinander verlaufende Querrillen (3, 4, 5, 6) aufweisenden Querrillenreihe (3', 4', 5', 6') versehen ist, wobei die Querrillen (3, 4, 5, 6) innerhalb des Profilbandes (1) enden oder mit ihrem einen Ende in die das Profilband (1) seitlich begrenzende Umfangsrille (2) einmünden und mit ihrem anderen Ende innerhalb des Profilbandes (1) enden,
wobei jede Querrille (3, 4, 5, 6) einen Rillengrund (9) und zwei Rillenwände (10a, 10b) und in Draufsicht zwei aneinander anschließende, erste und zweite Rillenabschnitte (7, 8) aufweist, welche, bezogen auf die in Rillenlaufrichtung verlaufende Mittellinie der Querrille (3, 4, 5, 6), einen stumpfen Winkel (α) einschließen, wobei die Rillenabschnitte (7, 8) an der Profilbandaußenfläche jeweils durch zwei gerade verlaufende Rillenkanten (7a, 7b, 8a, 8b) begrenzt sind, und wobei die Rillenkanten (7a, 7b) des ersten Rillenabschnittes (7) an die Rillenkanten (8a, 8b) des zweiten Rillenabschnittes (8) anschließen,
**dadurch gekennzeichnet,**
**dass** der erste Rillenabschnitt (7) zur axialen Richtung unter einem Winkel (β) von bis zu 20° und der zweite Rillenabschnitt (8) zur axialen Richtung unter einem Winkel (γ) von 30° bis 50° verläuft, wobei in jedem Rillenabschnitt (7, 8) an jeweils einer Rillenwand (10a, 10b) eine eine Schrägfläche bildende, zur und entlang der diese Rillenwand (10a, 10b) begrenzenden Rillenkante (7a, 8b) verlaufende Fase (11a, 11b) ausgebildet ist, wobei die Fasen (11a, 11b) entlang von Rillenkanten (7a, 8b) verlaufen, die nicht aneinander anschließen.

2. Fahrzeugluftreifen nach Anspruch 1, **dadurch gekennzeichnet, dass** der erste Rillenabschnitt (7) zur axialen Richtung unter einem Winkel (β) von bis zu 15° verläuft.

3. Fahrzeugluftreifen nach Anspruch 1 oder 2, **dadurch gekennzeichnet, dass** der zweite Rillenabschnitt (8) zur axialen Richtung unter einem Winkel (γ) von bis zu 40° verläuft.

4. Fahrzeugluftreifen nach einem der Ansprüche 1 bis 3, **dadurch gekennzeichnet, dass** das Profilband (1) eine erste und eine zweite, zueinander in Umfangsrichtung versetzte Querrillenreihe (3', 4°, 5°, 6') aufweist, wobei die Querrillen (3, 4, 5, 6) der ersten Querrillenreihe (3°, 4°, 5°, 6') in die eine Umfangsrichtung und die Querrillen (3, 4, 5, 6) der zweiten Querrillenreihe (3', 4', 5', 6') in die andere Umfangsrichtung geneigt sind und wobei die Querrillen (3, 4, 5, 6) der ersten Querrillenreihe (3', 4', 5', 6') in axialer Richtung mit den Querrillen (3, 4, 5, 6) der zweiten Querrillenreihe (3', 4', 5', 6') abschnittsweise überlappen.

5. Fahrzeugluftreifen nach Anspruch 4, **dadurch gekennzeichnet, dass** das Profilband (1) eine dritte Querrillenreihe (3', 4°, 5°, 6') aufweist, deren Querrillen (3, 4, 5, 6) in axialer Richtung neben den Querrillen (3, 4, 5, 6) der ersten Querrillenreihe (3', 4', 5°, 6') verlaufen und in axialer Richtung mit den Querrillen (3, 4, 5, 6) der zweiten Querrillenreihe (3', 4', 5', 6') abschnittsweise überlappen.

6. Fahrzeugluftreifen nach Anspruch 5, **dadurch gekennzeichnet, dass** das Profilband (1) eine vierte Querrillenreihe (3', 4', 5', 6') aufweist, deren Querrillen (3, 4, 5, 6) in axialer Richtung neben den Querrillen (3, 4, 5, 6) der zweiten Querrillenreihe (3', 4', 5°, 6') verlaufen und in axialer Richtung mit den Querrillen (3, 4, 5, 6) der dritten Querrillenreihe (3', 4', 5', 6') abschnittsweise überlappen.

7. Fahrzeugluftreifen nach einem der Ansprüche 1 bis 6, **dadurch gekennzeichnet, dass** die Querrillen (4, 5, 6) von zumindest einer Querrillenreihe (4', 5', 6') innerhalb des Profilbandes (1) enden und
dass die Querrillen (3) einer weiteren Querrillenreihe (3') mit ihrem einen Ende in die das Profilband (1) seitlich begrenzende Umfangsrille (2) einmünden und mit ihrem anderen Ende innerhalb des Profilbandes (1) enden.

8. Fahrzeugluftreifen nach Anspruch 7, **dadurch gekennzeichnet, dass** die mit ihrem einen Ende in die das Profilband (1) seitlich begrenzende Umfangsrille (2) einmündenden Querrillen (3) bei der Umfangsrille (2) einen Einmündungsabschnitt (9d) aufweisen, in welchem eine Grundanhebung (12) ausgebildet ist, die in Umfangsrichtung benachbarte Profilbandbereiche aneinander anbindet.

9. Fahrzeugluftreifen nach einem der Ansprüche 1 bis 8, **dadurch gekennzeichnet, dass** das Profilband ein schulterseitiges Profilband (1) ist, welches im montierten Zustand des Fahrzeugluftreifens vorzugsweise entlang der der Fahrzeuginnenseite zugeordneten Laufstreifenschulter verläuft.

10. Fahrzeugluftreifen nach Anspruch 9, **dadurch gekennzeichnet, dass** das schulterseitiges Profilband (1) vier Querrillenreihen (3', 4', 5', 6') aufweist, von welchen die beiden mittleren teilweise innerhalb und teilweise außerhalb der Bodenaufstandsfläche des Laufstreifens verlaufen.

11. Fahrzeugluftreifen nach Anspruch 9 oder 10, **dadurch gekennzeichnet, dass** das schulterseitiges Profilband (1) eine Querrillenreihe (6') aufweist, deren Querrillen (6) komplett außerhalb der Bodenaufstandsfläche verlaufen.

12. Fahrzeugluftreifen nach einem der Ansprüche 1 bis 11, **dadurch gekennzeichnet, dass**, im Längsschnitt der Querrillen (3, 4, 5, 6) betrachtet, ihr Rillengrund (9) zumindest einen Endabschnitt (9b, 9'b, 9c) aufweist, welcher unter einem Winkel (ε) von 30° bis 50°, insbesondere von 35° bis 45°, zur radialen Richtung in Richtung Profilbandaußenfläche verläuft.

## Claims

1. Pneumatic vehicle tyre of radial construction having a tread having at least one profile band (1), which is delimited laterally by at least one circumferential groove (2), runs around in the circumferential direction and is provided over its circumference with at least one transverse groove row (3', 4', 5', 6') having a plurality of transverse grooves (3, 4, 5, 6) which extend parallel to one another, wherein the transverse grooves (3, 4, 5, 6) end within the profile band (1) or have one of their ends opening into the circumferential groove (2) laterally delimiting the profile band (1) and have their other end ending within the profile band (1), wherein each transverse groove (3, 4, 5, 6) has a groove bottom (9) and two groove walls (10a, 10b) and, in plan view, two mutually adjoining, first and second groove portions (7, 8) which enclose an obtuse angle (α) with respect to the centre line of the transverse groove (3, 4, 5, 6) that extends in the running direction of the groove, wherein the groove portions (7, 8) are delimited at the profile band outer surface in each case by two rectilinearly extending groove edges (7a, 7b, 8a, 8b), and wherein the groove edges (7a, 7b) of the first groove portion (7) adjoin the groove edges (8a, 8b) of the second groove portion (8), **characterized**
**in that** the first groove portion (7) extends at an angle (β) of up to 20° to the axial direction, and the second groove portion (8) extends at an angle (γ) of 30° to 50° to the axial direction, wherein in each groove portion (7, 8) at in each case a groove wall (10a, 10b) there is formed a bevel (11a, 11b) which forms an oblique surface and extends with respect to and along the groove edge (7a, 8b) delimiting this groove wall (10a, 10b), wherein the bevels (11a, 11b) extend along groove edges (7a, 8b) which do not adjoin one another.

2. Pneumatic vehicle tyre according to Claim 1, **characterized in that** the first groove portion (7) extends with respect to the axial direction at an angle (β) of up to 15°.

3. Pneumatic vehicle tyre according to Claim 1 or 2, **characterized in that** the second groove portion (8) extends with respect to the axial direction at an angle (γ) of up to 40°.

4. Pneumatic vehicle tyre according to one of Claims 1 to 3, **characterized in that** the profile band (1) has a first and a second transverse groove row (3', 4', 5', 6') offset in relation to one another in the circumferential direction, wherein the transverse grooves (3, 4, 5, 6) of the first transverse groove row (3', 4', 5', 6') are inclined in the one circumferential direction, and the transverse grooves (3, 4, 5, 6) of the second transverse groove row (3', 4', 5', 6') are inclined in the other circumferential direction, and wherein the transverse grooves (3, 4, 5, 6) of the first transverse groove row (3', 4', 5', 6') overlap in the axial direction in certain portions with the transverse grooves (3, 4, 5, 6) of the second transverse groove row (3', 4', 5', 6').

5. Pneumatic vehicle tyre according to Claim 4, **characterized in that** the profile band (1) has a third transverse groove row (3', 4', 5', 6') whose transverse grooves (3, 4, 5, 6) extend in the axial direction next to the transverse grooves (3, 4, 5, 6) of the first transverse groove row (3', 4', 5', 6') and overlap in the axial direction in certain portions with the transverse grooves (3, 4, 5, 6) of the second transverse groove row (3', 4', 5', 6').

6. Pneumatic vehicle tyre according to Claim 5, **characterized in that** the profile band (1) has a fourth transverse groove row (3', 4', 5', 6') whose transverse grooves (3, 4, 5, 6) extend in the axial direction next to the transverse grooves (3, 4, 5, 6) of the second transverse groove row (3', 4', 5', 6') and overlap in the axial direction in certain portions with the transverse grooves (3, 4, 5, 6) of the third transverse groove row (3', 4', 5', 6').

7. Pneumatic vehicle tyre according to one of Claims 1 to 6, **characterized**
**in that** the transverse grooves (4, 5, 6) of at least one transverse groove row (4', 5', 6') end within the profile band (1), and
**in that** the transverse grooves (3) of a further transverse groove row (3') have one of their ends opening into the circumferential groove (2) laterally delimiting the profile band (1) and have their other end ending within the profile band (1).

8. Pneumatic vehicle tyre according to Claim 7, **characterized in that** the transverse grooves (3) having one of their ends opening into the circumferential groove (2) laterally delimiting the profile band (1) have at the circumferential groove (2) an opening-in portion (9d) in which there is formed a raised base area (12) which interconnects profile band regions which are adjacent in the circumferential direction.

9. Pneumatic vehicle tyre according to one of Claims 1 to 8, **characterized in that** the profile band is a shoulder-side profile band (1) which, in the mounted state of the pneumatic vehicle tyre, preferably extends along the tread shoulder assigned to the vehicle inner side.

10. Pneumatic vehicle tyre according to Claim 9, **characterized in that** the shoulder-side profile band (1) has four transverse groove rows (3', 4', 5', 6') of which the two central ones extend partially inside and partially outside of the ground contact patch of the tread.

11. Pneumatic vehicle tyre according to Claim 9 or 10, **characterized in that** the shoulder-side profile band (1) has a transverse groove row (6') whose transverse grooves (6) extend completely outside of the ground contact patch.

12. Pneumatic vehicle tyre according to one of Claims 1 to 11, **characterized in that**, as viewed in longitudinal section of the transverse grooves (3, 4, 5, 6), their groove bottom (9) has at least one end portion (9b, 9'b, 9c) which extends at an angle (ε) of 30° to 50°, in particular of 35° to 45°, with respect to the radial direction in the direction of the profile band outer surface.

## Revendications

1. Pneumatique de véhicule de conception radiale comprenant une bande de roulement pourvue d'au moins une bande profilée (1) qui est délimitée latéralement par au moins une rainure circonférentielle (2), qui s'étend dans la direction circonférentielle et qui est pourvue sur sa circonférence d'au moins une rangée de rainures transversales (3', 4' 5', 6') comportant une multitude de rainures transversales (3, 4, 5, 6) parallèles les unes aux autres, les rainures transversales (3, 4, 5, 6) se terminant à l'intérieur de la bande profilée (1) ou débouchant par une de leurs extrémités dans la rainure circonférentielle (2) délimitant latéralement la bande profilée (1) et par leur autre extrémité à l'intérieur de la bande profilée (1),
chaque rainure transversale (3, 4, 5, 6) comportant une base de rainure (9) et deux parois de rainure (10a, 10b) et, en vue de dessus, deux première et deuxième portions de rainure (7, 8) se raccordant l'une à l'autre qui forment un angle obtus (α) par rapport à la ligne médiane de la rainure transversale (3, 4, 5, 6), s'étendant dans la direction de roulement de la rainure, les portions de rainure (7, 8) étant chacune délimitées au niveau de la surface extérieure de la bande profilée par deux bords de rainure (7a, 7b, 8a, 8b) s'étendant de manière rectiligne et les bords de rainure (7a, 7b) de la première portion de rainure (7) se raccordant aux bords de rainure (8a, 8b) de la deuxième portion de rainure (8),
**caractérisé en ce que**
la première portion de rainure (7) s'étend en formant un angle (β) pouvant atteindre 20° par rapport à la direction axiale et la deuxième portion de rainure (8) s'étend en formant un angle (γ) de 30° à 50° par rapport à la direction axiale, un biseau (11a, 11b), qui forme une surface inclinée et qui s'étend en direction et le long du bord de rainure (7a, 8b) délimitant cette paroi de rainure (10a, 10b), étant formé dans chaque portion de rainure (7, 8) au niveau d'une paroi de rainure respective (10a, 10b), les biseaux (11a, 11b) s'étendant le long de bords de rainure (7a, 8b) qui ne se raccordent pas.

2. Pneumatique de véhicule selon la revendication 1, **caractérisé en ce que** la première portion de rainure (7) s'étend en formant un angle (β) pouvant atteindre 15° par rapport à la direction axiale.

3. Pneumatique de véhicule selon la revendication 1 ou 2, **caractérisé en ce que** la deuxième portion de rainure (8) s'étend en formant un angle (γ) pouvant atteindre 40° par rapport à la direction axiale.

4. Pneumatique de véhicule selon l'une des revendications 1 à 3, **caractérisé en ce que** la bande profilée (1) comporte une première et une deuxième rangée de rainures transversales (3', 4', 5', 6') décalées les unes des autres dans la direction circonférentielle, les rainures transversales (3, 4, 5, 6) de la première rangée de rainures transversales (3', 4', 5', 6') étant inclinées dans l'une des directions circonférentielles et les rainures transversales (3, 4, 5, 6) de la deuxième rangée de rainures transversales (3', 4', 5', 6') étant inclinées dans l'autre direction circonférentielle et les rainures transversales (3, 4, 5, 6) de la première rangée de rainures transversales (3', 4', 5', 6') chevauchant par portions dans la direction axiale les rainures transversales (3, 4, 5, 6) de la deuxième rangée de rainures transversale (3', 4', 5', 6').

5. Pneumatique de véhicule selon la revendication 4, **caractérisé en ce que** la bande profilée (1) comporte une troisième rangée de rainures transversales (3', 4', 5', 6'), dont les rainures transversales (3, 4, 5, 6) s'étendent dans la direction axiale à côté des rainures transversales (3, 4, 5, 6) de la première rangée de rainures transversales (3', 4', 5', 6') et chevauchent par portions dans la direction axiale les rainures transversales (3, 4, 5, 6) de la deuxième rangée de rainures transversales (3', 4', 5', 6').

6. Pneumatique de véhicule selon la revendication 5, **caractérisé en ce que** la bande profilée (1) comporte une quatrième rangée de rainures transversales (3', 4', 5', 6'), dont les rainures transversales (3, 4, 5, 6) s'étendent dans la direction axiale à côté des rainures transversales (3, 4, 5, 6) de la deuxième rangée de rainures transversales (3', 4', 5', 6') et chevauchent par portions dans la direction axiale les rainures transversales (3, 4, 5, 6) de la troisième rangée de rainures transversales (3', 4', 5', 6').

7. Pneumatique de véhicule selon l'une des revendications 1 à 6, **caractérisé en ce que** les rainures transversales (4, 5, 6) d'au moins une rangée de rainures transversales (4', 5', 6') se terminent à l'intérieur de la bande profilée (1) et **en ce que** les rainures transversales (3) d'une autre rangée de rainures transversales (3') débouchent par une de leurs extrémités dans la rainure circonférentielle (2) délimitant latéralement la bande profilée (1) et se terminent par leur autre extrémité à l'intérieur de la bande profilée (1).

8. Pneumatique de véhicule selon la revendication 7, **caractérisé en ce que** les rainures transversales (3) débouchant dans la rainure circonférentielle (2) délimitant latéralement la bande profilée (1) comportent près de la rainure circonférentielle (2) une portion d'embouchure (9d) dans laquelle est formée une élévation de base (12) qui relie les unes aux autres des zones de bande profilée adjacentes dans la direction circonférentielle.

9. Pneumatique de véhicule selon l'une des revendications 1 à 8, **caractérisé en ce que** la bande profilée est une bande profilée côté épaulement (1) qui, lorsque le pneumatique de véhicule est monté, s'étend de préférence le long de l'épaulement de bande de roulement associé au côté intérieur du véhicule.

10. Pneumatique de véhicule selon la revendication 9, **caractérisé en ce que** la bande profilée côté épaulement (1) comporte quatre rangées de rainures transversales (3', 4', 5', 6'), dont les deux médianes s'étendent en partie à l'intérieur et en partie à l'extérieur de la surface de contact au sol de la bande de roulement.

11. Pneumatique de véhicule selon la revendication 9 ou 10, **caractérisé en ce que** la bande profilée côté épaulement (1) comporte une rangée de rainures transversales (6') dont les rainures transversales (6) s'étendent complètement à l'extérieur de la surface de contact au sol.

12. Pneumatique de véhicule selon l'une des revendications 1 à 11, **caractérisé en ce que**, dans la vue en coupe longitudinale des rainures transversales (3, 4, 5, 6), leur fond de rainure (9) comporte au moins une portion d'extrémité (9b, 9'b, 9c), qui s'étend en formant un angle (ε) de 30° à 50°, en particulier de 35° à 45°, par rapport à la direction radiale en direction de la surface extérieure de la bande profilée.
